# EUROPÄISCHE PATENTSCHRIFT

(11) **EP 2 661 070 B1**
(45) Veröffentlichungstag und Bekanntmachung des Hinweises auf die Patenterteilung: **16.09.2020**
(21) Anmeldenummer: 13166235.5
(22) Anmeldetag: 02.05.2013
(51) Int. Cl.: H04N 1/60, B41F 33/00

(54) **Verfahren und Vorrichtung zur Farbmessung an einem Druckbild**
Method and device for the colorimetric measurement of a printed image
Procédé et dispositif de mesure de la couleur sur une image imprimée

(30) Priorität: 02.05.2012 DE 102012207267
(43) Veröffentlichungstag der Anmeldung: 06.11.2013
(73) Patentinhaber: BST eltromat International GmbH, 33739 Bielefeld (DE)
(72) Erfinder: Dattner, Michael, 33739 Bielefeld (DE); Bettführ, Jürgen, 33739 Bielefeld (DE); Wiebe, Michael, 33818 Leopoldshöhe (DE)
(74) Vertreter: Ter Meer Steinmeister & Partner

(56) Entgegenhaltungen:
- EP-A2- 1 958 773
- DE-A1- 10 218 068
- DE-T2- 69 530 311
- JP-A- 2005 153 165
- SIMPSON M L ET AL: "IMAGING COLORIMETRY: A NEW APPROACH", APPLIED OPTICS, OPTICAL SOCIETY OF AMERICA, WASHINGTON, DC; US, Bd. 30, Nr. 32, 10. November 1991 (1991-11-10), Seiten 4666-4671, XP000241792, ISSN: 0003-6935, DOI: 10.1364/AO.30.004666

## Beschreibung

Die Erfindung betrifft ein Verfahren und eine Vorrichtung zur Farbmessung an einem Druckbild und insbesondere an einem Druckbild, das auf einer laufenden Materialbahn aufgedruckt ist.

Ein Verfahren nach dem Oberbegriff des Anspruchs 1 ist aus DE 695 30 311 T2 bekannt.

DE 102 18 068 A1 beschreibt ein Verfahren zur Erstellung von Farbkalibrierungskennlinien anhand von Testmustern, deren Bildpunkte dieselbe Farbinformation enthalten.

EP 1 958 773 A3 Beschreibt ein Verfahren zum Überprüfen eines Druckbildes mit Hilfe einer Kamera mit Zoom.

Die Bedienungsperson einer Druckmaschine kann die Qualität des erzeugten Druckbildes auf einer laufenden Materialbahn dadurch prüfen, dass eine über der Materialbahn verfahrbar angeordnete Farbmessvorrichtung auf einen ausgewählten, zu prüfenden Bereich des Druckbildes ausgerichtet wird, wobei auf einem Bildschirm das Druckbild für die Auswahl wiedergegeben wird. Der von der Farbmessvorrichtung gemessene Bereich wird auf dem Bildschirm wiedergegeben und es kann ein Farbmesswert ausgegeben werden. Anhand der Wiedergabe des Sichtbereichs der Farbmessvorrichtung auf dem Bildschirm kann die Qualität des Farbdrucks durch Augenschein hinsichtlich seiner Qualität überprüft werden. Dabei unterscheidet die Farbmessvorrichtung nicht, ob das gemessene Farbfeld in der Farbverteilung homogen ist oder nicht. Das auf dem Bildschirm wiedergegebene Farbfeld, das die Bedienungsperson durch Augenschein auswählt, kann Unregelmäßigkeiten oder Störungen aufweisen, die nicht ohne weiteres sichtbar sind, aber zu einem gegenüber einem homogenen Farbfeld unterschiedlichen Messwert führen.

Mit der vorliegenden Erfindung, wie sie in den unabhängigen Ansprüchen 1 und 6 definiert ist, soll die Farbmessung verbessert werden, sodass die von der Farbmessvorrichtung ausgegebenen Messergebnisse als zuverlässig ein homogenes Farbfeld wiedergebend erachtet werden können.

Hierfür wird erfindungsgemäß bei der Auswahl des zu messenden Farbfeldes auf dem Druckbild automatisch ein Prüfungsverfahren in Gang gesetzt, durch das die Zuverlässigkeit bzw. Validität der Farbmessung überprüft wird, bevor ein Farbmesswert für die Beurteilung durch die Bedienungsperson oder auch für die Beurteilung durch eine elektronische Farbauswerteinrichtung ausgegeben bzw. freigegeben wird.

Damit wird verhindert, dass eine Bedienungsperson ein Farbfeld für die Farbmessung auswählt, das kein zuverlässiges Messergebnis liefern kann, weil das ausgewählte Farbfeld nicht homogen ist und der Farbmesswert des ausgewählten Farbfeldes nicht dem eines homogenen Farbfeldes entspricht.

Die Messung des ausgewählten Farbfeldes und die Aufnahme eines Bildes durch die Bildaufnahmeeinrichtung bzw. durch eine Kamera erfolgt am gleichen Ort entweder gleichzeitig oder kurz hintereinander.

Die Überprüfung der Farbhomogenität des Messbereichs bzw. des Farbfeldes anhand des aufgenommenen Bildes wird durch ein Bildverarbeitungsprogramm in einer Recheneinheit ausgeführt.

Dabei kann die Überprüfung der Farbhomogenität anhand des aufgenommenen Bildes durch einen Vergleich mit einem in einem Speicher hinterlegten Referenzwert vorgenommen werden.

Vorzugsweise wird ein Cursor mit einem runden Zielbereich in Verbindung mit runden Farbmarken verwendet, wobei eine Inhomogenität des aufgenommenen Bildes dadurch entstehen kann, dass der runde Zielbereich des Cursors die runde Farbmarke schneidet.

Nach einer anderen Art der Homogenitätsprüfung wird der Farbwert des aufgenommenen

Bildes durch Vergleich mit einem als Referenzwert hinterlegten Farbwert verglichen, wobei vorzugsweise das aufgenommene Bild in Einzelflächen aufgeteilt wird und aus den Farbmesswerten der Einzelflächen ein Mittelwert errechnet wird, der mit dem Farbmesswert einer Einzelfläche verglichen wird.

Zweckmäßigerweise wird auch ein Mittelwert der Farbmessungen bei mehreren Umdrehungen des Druckzylinders ermittelt, um einen Vergleich der jeweiligen Farbmessung mit dem Mittelwert zu ermöglichen.

Nach einer weiteren Ausgestaltung der Erfindung kann die Zuverlässigkeit der Farbmessung dadurch optimiert werden, dass in einer Recheneinheit bereits in der Druckvorstufe eine Vorauswahl homogener Farbbereiche vorgenommen wird, in denen beim Mehrfarbendruck jeweils eine Druckfarbe homogen aufgetragen wird. Dabei werden in der Druckvorstufe, in der einzelne Druckbilder mit den einzelnen Farben eines Mehrfarbendrucks erstellt werden, jene Bereiche in den einzelnen, mit einer einzelnen Farbe gedruckten Druckbildern ausgewählt, die in jedem einzelnen Druckbild homogen ausgedruckt werden sollen und mit den homogenen Bereichen der anderen einzelnen, mit einer einzelnen Farbe gedruckten Druckbildern sich überlappen, worauf diese übereinander zu druckenden homogenen Farbbereiche der einzelnen Druckbilder im fertigen Mehrfarbendruckbild als für die Farbmessung bevorzugte Bereiche gespeichert werden

Für die Durchführung des Verfahrens wird erfindungsgemäß eine Messeinheit mit einem Farbmesskopf und einer Kamera vorgesehen, wobei eine Recheneinheit das von der Kamera aufgenommene Bild auf Farbhomogenität überprüft und den Farbmesswert des Farbfeldes in Abhängigkeit vom Ergebnis der Homogenitätsprüfung freigibt oder verwirft.

Vorzugsweise wird eine quer über die laufende Materialbahn verfahrbare Messeinheit vorgesehen in Verbindung mit einer elektronischen Auswähleinrichtung umfassend einen Bildschirm, auf dem das Farbfeld in dem auf dem Bildschirm wiedergegebenen Druckbild auswählbar ist, wobei eine Verstelleinrichtung die mit dieser Auswähleinrichtung elektronisch verbundene Messeinheit der Auswahl auf dem Bildschirm folgend über dem ausgewählten Farbfeld des Druckbildes auf der Materialbahn positioniert.
Erfindungsgemäß wird die Positionierung der Messeinheit über einem Druckbild auf der Materialbahn derart vorgenommen, dass an einem auf einem Bildschirm wiedergegebenen Druckbild ein Farbfeld ausgewählt wird und damit automatisch die Messeinheit auf dieses Farbfeld im Druckbild auf der Materialbahn ausgerichtet wird. Hierfür wird sowohl für die Positionierung der Messeinheit über dem Druckbild auf der Materialbahn eine Einrichtung zur Bestimmung des Koordinatensystems als auch am Bildschirm eine Einrichtung zur Bestimmung des Koordinatensystems des auf dem Bildschirm wiedergegebenen Druckbildes vorgesehen und es werden auf elektronischem Wege die beiden Koordinatensysteme derart synchronisiert, dass mit der Auswahl am Bildschirm selbsttätig die Messeinheit über den ausgewählten Bereich des Druckbildes auf der Materialbahn verfahren bzw positioniert wird.

Hierbei kann am Bildschirm nicht nur ein von der Kamera in der Messeinheit aufgenommenes Druckbild wiedergegeben werden, sondern auch ein aus einer Druckvorstufe stammendes Druckbild oder ein als pdf-Datei vorliegendes Druckbild, das bspw aus dem Speicher abgerufen wird. Auch bei einem solchen am Bildschirm wiedergegebenen Druckbild, das nicht das von der Kamera aufgenommene Druckbild ist, kann durch die Synchronisation der beiden Koordinatensysteme eine selbsttätige Positionierung der Messeinheit über dem Druckbild auf der Materialbahn erfolgen, sobald am Bildschirm ein Messbereich bzw Farbfeld an dem am Bildschirm wiedergegebenen Druckbild ausgewählt ist.

Die Erfindung wird beispielsweise anhand der Zeichnung näher erläutert. Es zeigen
- Fig. 1: schematisch eine Messeinheit über einer bedruckten Materialbahn mit einem Bildschirm für die Auswahl eines Farbfeldes,
- Fig. 2: auf dem Bildschirm wiedergegebene Kontrollbilder des Farbfeldes bzw Messbereichs, und
- Fig. 3: eine Wiedergabe eines nicht exakt auf eine Farbmarke ausgerichteten Cursors.

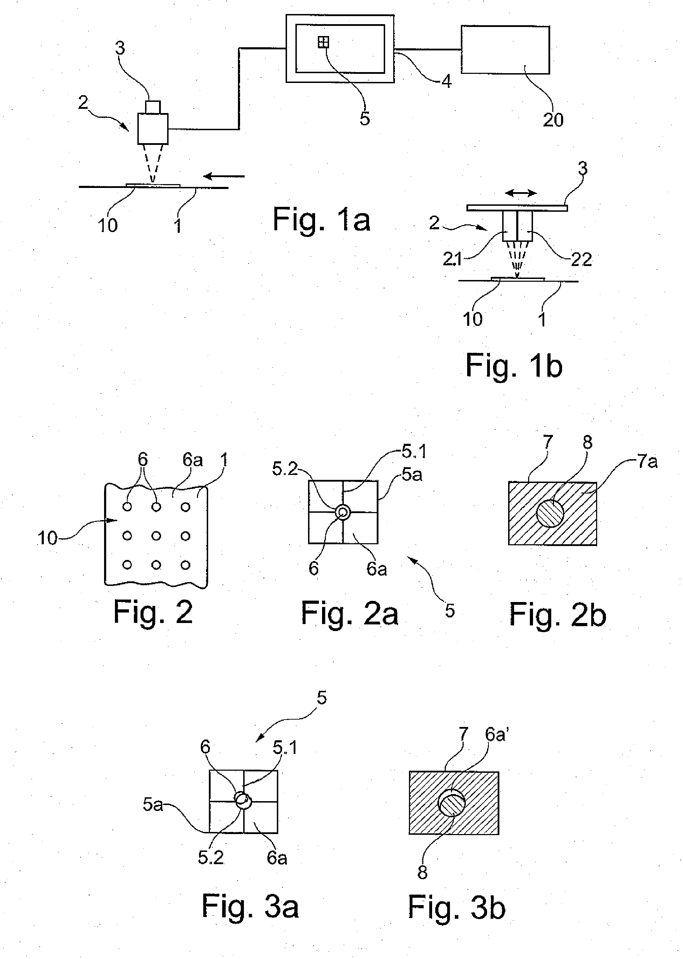

Fig 1a zeigt eine in Pfeilrichtung bewegte Materialbahn 1, auf der fortlaufend sich wiederholende Druckbilder 10 (Fig. 2) aufgebracht sind. Über der laufenden Materialbahn 1 ist eine Farbmesseinheit 2 auf einer Traverse 3 quer über die Materialbahn 1 verfahrbar, wie Fig. 1b schematisch zeigt, die schematisch eine Ansicht von links in Fig. 1a wiedergibt. In der Farbmesseinheit 2 ist ein Farbmesskopf 2.1 mit einer Beleuchtungseinrichtung, beispielsweise einem Stroboskop und einem Farbmesssensor sowie eine Kamera 2.2, beispielsweise eine CCD-Kamera, angeordnet, die zusammen mit dem Farbmesssensor auf einen Bereich des Druckbildes 10 ausgerichtet werden kann.

Mit 4 ist ein Bildschirm bezeichnet, der mit der Messeinheit 2 in Verbindung steht. Auf dem Bildschirm 4 wird das auf der Materialbahn 1 aufgedruckte Druckbild wiedergegeben, wobei durch einen Cursor 5 ein Farbfeld, z.B. eine der Farbmarken 6 (Fig. 2), ausgewählt werden kann, auf das die Messeinheit 2 zur Farbmessung ausgerichtet wird.

Mit 20 ist eine Recheneinheit bezeichnet, die an den Bildschirm 4 und die Messeinheit 2 angeschlossen ist und die Signale von der Messeinheit 2 verarbeitet.

Fig. 2 zeigt schematisch eine Materialbahn 1 mit einem Druckbild 10, das als Beispiel aus runden Farbmarken 6 besteht Der Cursor 5 ist bei dem dargestellten Ausführungbeispiel als Rechteck oder Quadrat mit einem Fadenkreuz 5.1 ausgebildet, in dessen Mitte ein Kreis 5.2 wiedergegeben ist. Der Cursor 5 in Fig. 2a ist auf eine der Farbmarken 6 so ausgerichtet, dass der kreisförmige Zielbereich 5.2 die runde Farbmarke 6 umgibt. Mit 6a ist die Umgebung der Farbmarke 6 im Cursorbereich bezeichnet. Der in Fig. 2a wiedergegebene Cursor 5 wird zweckmäßigerweise in vergrößerter Darstellung in einem Teilbereich auf dem Bildschirm 4 mit der ausgewählten Farbmarke 6 und deren Umgebung 6a wiedergegeben, sodass die Bedienungsperson die Ausrichtung der Messeinheit 2 auf das gewünschte Farbfeld bzw die Farbmarke 6 leichter vornehmen kann.

Mit 7 ist in Fig. 2b eine Wiedergabe bezeichnet, die in vergrößerter Darstellung den durch eine Beleuchtungseinrichtung in der Messeinheit beleuchteten Bereich 8 der Farbmarke 6 zeigt, wobei die Umgebung des Leuchtflecks 8 entsprechend der Umgebung 6a der Farbmarke 6 durch eine Blendeneinrichtung ausgeblendet und z.B. schwarz wiedergegeben wird, wie durch den schraffierten Bereich 7a angedeutet ist
Diese Wiedergabe 7 entsprechend Fig 2b, die dem Sichtfeld der Kamera entspricht, wird vorzugsweise ebenfalls auf dem Bildschirm 4 wiedergegeben.

Der Leuchtfleck 8 in Fig. 2b, der dem Sichtbereich des Farbmesssensors im Farbmesskopf 2.1 (Fig. 1b) entspricht, gibt eine homogene Farbfläche wieder, nachdem der Cursor 5 mit ausreichender Genauigkeit auf die Farbmarke 6 ausgerichtet ist bzw der kreisförmige Zielbereich 5.2 des Cursors die runde Farbmarke 6 umgibt Der von der Beleuchtungseinrichtung im Farbmesskopf 2.1 erzeugte Leuchtfleck 8 ist bei dem wiedergegebenen Ausführungsbeispiel vorzugsweise kleiner als der Durchmesser der runden Farbmarke 6 auf dem Druckbild 10.

Der Cursor 5 wird auf die ausgewählte Farbmarke 6 bzw. das zu prüfende Farbfeld 6 ausgerichtet und die Wiedergabe auf dem Bildschirm 4 ist so gewählt, dass auch die Umgebung 6a des ausgewählten Farbfeldes 6 auf dem Bildschirm 4 beispielsweise in Form des in Fig. 2a wiedergegebenen Quadrats des Cursors 5 wiedergegeben wird.

Fig. 3a und 3b zeigen in der Darstellung der Fig. 2a und 2b einen nicht exakt auf die Farbmarke 6 ausgerichteten Cursor 5, wobei die Mitte bzw. der Zielkreis 5.2 des Cursors 5 etwas versetzt ist zu der runden Farbmarke 6. Die Wiedergabe dieser Messsituation auf dem Bild 7 in Fig 3b zeigt den durch den Leuchtfleck 8 der Beleuchtungseinrichtung wiedergegebenen Sichtbereich des Farbsensors, der dem Zielkreis 5.2 des Cursors 5 entspricht. Nachdem der Zielkreis 5.2 des Cursors 5 die runde Farbmarke 6 in Fig. 3a schneidet, wird in Fig. 3b bzw. dem Bild 7 auf dem Bildschirm 4 ein sichelförmiger Umgebungsbereich 6a' der Farbmarke 6 wiedergegeben, nachdem der Cursor 5 nicht exakt auf die runde Farbmarke 6 ausgerichtet ist.

In Fig. 3b gibt der Leuchtfleck 8 einen nichthomogenen Sichtbereich des Farbmesssensors wieder, weil die Farbfläche sich nicht homogen über den Sichtbereich erstreckt und im Sichtbereich eine sichelförmige hellere Fläche 6a' der Umgebung 6a der Farbmarke vorhanden ist

Nach einem ersten Aspekt der Erfindung wird für die Farbmessung durch eine Bedienungsperson ein Farbfeld, hier eine Farbmarke 6, mit einer dem Augenschein nach homogenen Farbverteilung am Bildschirm 4 ausgewählt, damit man ein möglichst zuverlässiges Messergebnis der ausgewählten Farbe erhält. Hierzu wird beispielsweise mittels des vorzugsweise als Touchscreen ausgebildeten Bildschirms 4, auf dem das Druckbild 10 auf der Materialbahn 1 wiedergegeben wird, ein Farbfeld im Druckbild oder auch eine neben dem Druckbild 10 aufgebrachte Farbmarke 6 ausgewählt. Hierfür kann der Cursor 5 auf dem Touchscreen 4 auf das gewählte Farbfeld 6 des Druckbildes 10 bewegt werden, dessen Farbe gemessen werden soll.

Wenn der Cursor 5 auf ein gewähltes Farbfeld 6 ausgerichtet wird, wird auf dem Bildschirm 4 der Bereich 6a des Druckbildes um das gewählte Farbfeld 6 herum wiedergegeben, damit die Bedienungsperson die Positionierung des Cursors 5 leichter vornehmen kann. Wenn beispielsweise die runde Farbmarke 6 durch den Cursor 5 ausgewählt wird, wird ein etwa quadratisches Prüfbild 5a mit der Umgebung 6a der runden Farbmarke 6 auf dem Bildschirm 4 wiedergegeben. Für die Bedienungsperson ist auf diesem Prüfbild 5a deutlich erkennbar, ob sich der ausgewählte Messbereich bzw. das Farbfeld auf einer Kante zwischen unterschiedlichen Farbbereichen 6 und 6a befindet, wie in Fig 3a gezeigt, und somit nicht zutreffend ausgerichtet ist. Die Bedienungsperson kann dann den Cursor besser ausrichten. Mit anderen Worten erleichtert die Wiedergabe der Umgebung 6a des zu messenden Farbfeldes 6 die Treffsicherheit bei der Auswahl eines homogenen Farbfeldes 6.

Mit der Bewegung des Cursors 5 zur Auswahl eines homogenen Farbfeldes 6 in dem am Bildschirm 4 wiedergegebenen Druckbild 10 ist die Bewegung der Messeinheit 2 gekoppelt, die auf der Führungsbahn bzw. Traverse 3 quer über das Druckbild auf der Materialbahn 1 verfahrbar ist. Damit wird gleichzeitig mit der Cursorbewegung die Messeinheit 2 über das ausgewählte Farbfeld im Druckbild 10 auf der Materialbahn 1 positioniert

Die Messeinheit 2 weist einen Farbmesskopf 2.1 auf, der einen Farbmesssensor und eine mit diesem fest verbundene Beleuchtungseinrichtung, z.B. ein Stroboskop, umfasst, durch die der Sichtbereich des Farbmesssensors kurzzeitig beleuchtet wird Die Beleuchtungseinrichtung liefert durch eine entsprechende Optik bzw ein entsprechendes Linsensystem z.B. einen runden Leuchtfleck 8 auf dem Druckbild 10 auf der Materialbahn 1 Mit diesem Farbmesskopf 2.1 aus Farbmesssensor und Beleuchtungseimichtung ist eine Bildaufhahmeeinrichtung 2.2 (Fig. 1b), beispielsweise eine CCD-Kamera fest verbunden, deren Optik auf den Sichtbereich des Farbmesssensors bzw auf den Leuchtfleck 8 ausgerichtet ist.

Die Materialbahn 1 mit darauf fortlaufend aufgedruckten Druckbildern 10 wird in der Praxis mit einer Geschwindigkeit von etwa 800 m pro Minute bewegt, wobei in an sich bekannter Weise durch Sensoren die Drehzahl des nicht dargestellten Druckzylinders über eine Recheneinheit in eine exakte Positionsangabe des Druckbildes 10 bzw eines einer Farbmarke 6 entsprechenden Bereichs des Druckbildes 10 für die Messeinheit 2 umgesetzt wird

Bei der Auswahl eines Farbfeldes 6 am Bildschirm 4 wird durch eine elektronische Koppelung bzw Synchronisation mit der Messeinheit 2 diese über den Bereich des Druckbildes 10 auf der Materialbahn 1 bewegt, der auf dem Bildschirm 4 ausgewählt wird.

Hierfür wird eine Einrichtung zur Bestimmung des Koordinatensystems bzw. des Koordinatenursprungs für die Position der Messeinheit 2 über dem Druckbild 10 auf der Materialbahn 1 vorgesehen sowie eine Einrichtung zur Bestimmung des Koordinationsystems bzw. Koordinatenursprungs an dem auf dem Bildschirm 4 wiedergegebenen Druckbild, wobei die beiden Einrichtungen derart elektronisch gekoppelt bzw. synchronisiert sind, dass die auf dem Bildschirm 4 ausgewählten Koordinaten eines zu messenden Farbfeldes zugleich am Koordinatensystem der Messeinheit 2 eingestellt werden, mit der Folge, dass die Messeinheit 2 durch eine Veistelleirnichtung über das Farbfeld auf der Materialbahn 1 bewegt wird, das auf dem Druckbild am Bildschirm 4 ausgewählt ist. Hierfür wird zweckmäßigerweise in beiden Einrichtungen ein übereinstimmender Koordinatenursprung festgelegt, von dem aus die Koordinaten des am Bildschirm ausgewählten und von der Messeinheit über der Materialbahn anzufahrenden Farbfeldes bestimmt werden

Erfindungsgemäß wird das am Bildschirm 4 eingerichtete Koordinatensystem bzw, der Koordinatenursprung auch auf ein am Bildschirm 4 wiedergegebenes, aus einem Speicher abgerufenes Druckbild angewendet, bei dem es sich um ein Druckbild aus einer Druckvorstufe handeln kann Dieses Druckbild aus dem Speicher bzw. aus einer Druckvorstufe kann als pdf-Datei vorliegen und auf dem Bildschirm 4 wiedergegeben werden, wobei die Auswahl eines Farbfeldes auf diesem aus dem Speicher abgerufenen Druckbild in gleicher Weise synchronisiert wird mit dem Koordinatensystem der Messeinheit 2, so dass auch in diesem Fall die Messeinheit 2 über dem Farbfeld auf dem Druckbild 10 der Materialbahn 1 positioniert wird, wenn am Bildschirm 4 ein Farbfeld aus einem einer pdf-Datei entsprechenden Druckbild ausgewählt wird
Es ist erfindungsgemäß somit nicht erforderlich, dass das am Bildschirm 4 wiedergegebene Druckbild für die Auswahl eines Farbfeldes das von der Kamera in der Messeinheit 2 aufgenommenen Druckbild 10 ist, vielmehr kann ein äquivalentes Druckbild aus einer Druckvorstufe am Bildschirm 4 für die Auswahl des zu messenden Farbfeldes wiedergegeben werden, wobei durch die Synchronisation der beiden Koordinatensysteme von Messeinheit 2 einerseits und Bildwiedergabe am Bildschirm 4 andererseits die Messeinheit 2 über das Farbfeld des Druckbildes 10 auf der Materialbahn 1 verfahren wird, das dem Farbfeld auf dem am Bildschirm 4 wiedergegebenen Druckbild entspricht, das nicht von der Kamera in der Messeinheit 2 aufgenommen ist

Nachdem das aus dem Speicher bspw. als pdf-Datei abgerufene Druckbild am Bildschirm 4 an sich identisch ist mit dem auf der Materialbahn 1 aufgedruckten Druckbild 10 kann an einer vorgegebenen Stelle des Druckbildes, bspw. an einer Ecke des Druckbildes, ein Koordinatenursprung festgelegt werden, der für die Positionierung der Messeinheit 2 über dem Druckbild 10 auf der Materialbahn 1 ebenso gilt wie für die Auswahl eines Farbfeldes am Bildschirm 4. Die Koordinaten des Farbfeldes am Bildschirm 4 werden auf elektronischem Wege auf die Verstelleinrichtung der Messeinheit 2 über dem Druckbild 10 auf der Materialbahn 1 übertragen.

Nach dem Schritt des Auswählens des zu messenden Farbfeldes 6 im Druckbild 10 auf dem als Auswähleinrichtung dienenden Bildschirm bzw. Touchscreen 4 und der gleichzeitigen Positionierung der Messeinheit 2 über der ausgewählten Stelle im Druckbild 10 auf der Materialbahn 1 wird nach einem zweiten Aspekt der Erfindung selbsttätig ein Prüfprogramm bezüglich der Zuverlässigkeit der vorzunehmenden Farbmessung ausgeführt. Durch die Synchronisierung des Betriebs der Messeinheit 2 mit der Drehzahl des Druckzylinders wird das ausgewählte Farbfeld 6 in dem Augenblick vom Farbmesskopf 2.1 beleuchtet, in dem sich das ausgewählte Farbfeld 6 unter dem Farbmesskopf befindet. Gleichzeitig mit der Beleuchtung des ausgewählten Farbfeldes 6 und der Farbmessung dieses Farbfeldes durch den Farbmesssensor wird durch die Kamera 2.2 ein Bild des beleuchteten Farbmessbereichs bzw. des Sichtbereichs 8 des Farbmesssensors aufgenommen und in einem Speicher hinterlegt.

Das von der Kamera 2.2 aufgenommene Bild entspricht der Fig. 2b oder 3b bzw. dem Sichtbereich des Farbmesssensors bzw. der beleuchteten Fläche 8 des gewählten Farbfeldes 6, das beispielsweise eine runde Form hat, aber auch eine andere Form haben kann, z.B. eine ovale Form oder auch ein beliebig geformtes Farbfeld in einem z.B. eine Landschaft wiedergebenden Druckbild sein kann.

Der beleuchtete Sichtbereich 8 des Farbmesssensors kann eine homogene Farbfläche wiedergeben (Fig. 2b), die der Farbmesssensor in einen bestimmten Farbmesswert umsetzt. Es kann aber auch sein, dass sich in dem beleuchteten Sichtbereich 8 des Farbmesssensors eine nicht homogene Farbfläche befindet, die z.B. mit einem dunklen Fleck versehen sein kann oder auch gegenüber dem zu messenden Farbton hellere Flächenbereiche aufweist. Derartige Störungen der Farbfläche im Sichtbereich des Farbmesssensors bzw. im ausgewählten Farbfeld 6, die für die Bedienungsperson durch Augenschein nicht oder nicht ohne weiteres erkennbar sind, führen zu unterschiedlichen Farbmesswerten am Ausgang des Farbmesssensors.

Als Beispiel eines nichthomogenen Sichtbereichs 8 des Farbmesssensors ist in Fig. 3a und 3b eine runde Farbmarke 6 wiedergegeben, auf die der Cursor 5 in Fig 3a nicht exakt ausgerichtet ist, sodass im beleuchteten Sichtbereich 8 des Farbmesssensors ein sichelförmiger heller Bereich 6a' der Umgebung 6a der Farbmarke 6 vorhanden ist. Dieser eine Inhomogenität darstellende hellere, sichelförmige Bereich 6a' führt zu einem anderen Messergebnis des Farbmesssensors als der homogene Sichtbereich 8 in Fig. 2b.

Der Farbmesssensor selbst überprüft nicht die Homogenität des beleuchteten Sichtbereichs 8 bzw. des zu messenden Farbfeldes 6. Diese Überprüfung wird durch die Kamera 2.2 vorgenommen, die gleichzeitig mit dem Farbmesssensor ein Bild des beleuchteten Sichtbereichs 8 aufnimmt und das gespeicherte Bild durch die Recheneinheit 20 auf Störungen der Homogenität überprüft, bspw. durch Vergleich mit einer als Referenzwert im Speicher hinterlegten Farbfläche. Durch die an die Kamera 2.2 angeschlossene Recheneinheit 20 wird z.B. festgestellt, dass sich in dem beleuchteten Sichtbereich 8 des Farbmesssensors ein hellerer Bereich (sichelförmiger Randbereich 6a') befindet, worauf durch die Recheneinheit 20 entschieden wird, dass der Sichtbereich 8 nicht homogen ist. Hierauf wird die Messung durch die Recheneinheit 20 verworfen bzw. für die Auswertung nicht zugelassen.

In der gleichen Weise kann eine ungleichmäßige Farbverteilung, die sich über den beleuchteten Sichtbereich 8 erstreckt, als Inhomogenität beurteilt werden Das Prüfprogramm der an die Kamera angeschlossenen Recheneinheit 20 kann entsprechend ausgelegt werden, ab welchem Schwellenwert einer Störung bzw. Inhomogenität des beleuchteten Sichtbereichs 8 bzw. des aufgenommenen Bildes die Farbmessung verworfen wird oder nicht.

Bei der Homogenitätsprüfung läuft in der an die Kamera 2.2 angeschlossenen Recheneinheit 20 vorzugsweise ein Bildverarbeitungsprogramm ab, bei dem das aufgenommene Bild entsprechend dem Sichtbereich 8 z.B in Einzelflächen aufgeteilt wird. Aus den Farbmesswerten dieser Einzelflächen wird ein Mittelwert aus der Gesamtzahl der aufgeteilten Flächen errechnet. Hierauf wird der Farbmesswert einer Einzelfläche mit dem Mittelwert verglichen. Liegt der Farbmesswert einer Einzelfläche zu weit von dem errechneten Mittelwert ab, so wird dies als ein nichthomogener Bereich bewertet. Hierbei kann ein bestimmter Schwellenwert vorgegeben werden, ab dem eine Abweichung des Farbmesswertes einer Einzelfläche von dem Mittelwert als tolerierbar eingestuft wird oder nicht.

Wird nach Prüfung des von der Kamera 2.2 aufgenommenen Bildes festgestellt, dass der beleuchtete Sichtbereich 8 eine homogene Farbfläche wiedergibt (Fig. 2b), so wird das Messergebnis des Farbmesssensors für die weitere Beurteilung freigegeben.

Durch die Messung eines ausgewählten Farbfeldes durch den Farbmesskopf 2.1 einerseits und die Kamera 2.2 andererseits am gleichen Ort und die an den Auswahlschritt anschließende automatische Überprüfung des durch die Kamera 2.2 aufgenommenen Bildes auf Homogenität bzw. Gleichmäßigkeit des aufgenommenen Farbfeldes 6 und durch Verwerfen nichthomogener Bilder bzw. Freigabe homogener Bilder erhält man eine zuverlässige Farbmessung für die Beurteilung des auf der Materialbahn aufgedruckten Druckbildes

Fig. 1b zeigt Farbmesskopf 2.1 und Kamera 2.2 nebeneinander quer zur Bahnlauftichtung In der Praxis sind Farbmesskopf 2.1 und Kamera 2.2 in Laufrichtung der Materialbahn 1 hintereinander in der Messeinheit 2 angeordnet Die Kamera 2.2 kann mit einem Flächenblitz versehen sein, der einen größeren Sichtbereich der Kamera beleuchtet, während der Farbmesskopf mit einem Punktblitz für die Spektralmessung versehen sein kann. Die Messung am gleichen Ort durch den Farbmesskopf 2.1 und die Bildaufnahme durch die Kamera 2.2 kann zeitversetzt vorgenommen werden, es ist aber auch möglich, gleichzeitig die Farbmessung durch den Farbmesskopf 2.1 und die Bildaufnahme durch die Kamera 2.2 vorzunehmen. In jedem Fall wird sowohl die Bildaufnahme durch die Kamera als auch die Farbmessung am gleichen Ort vorgenommen.

Die Beurteilung des gemessenen Farbfeldes 6 bzw. des Farbmesswertes kann durch eine Bedienungsperson und/oder durch eine weitere elektronische Auswerteinrichtung vorgenommen werden.

Nach einer abgewandelten Ausführungsform kann in die an die Kamera 2.2 angeschlossene Recheneinheit 20 auch ein Referenzwert der Farbmessung z.B. am Bildschirm 4 eingegeben werden, mit dem der gemessene Farbmesswert verglichen wird Hierdurch kann beurteilt werden, ob der Farbmesswert eines homogenen Farbfeldes 6 auch den Vorgaben eines bestimmten Farbtones entspricht, der als Referenzwert eingegeben wird oder in einem Speicher hinterlegt ist.

Es kann z.B. der Referenzwert einer Farbe eingegeben werden als Vergleichsfarbwert, indem die Koordinaten der Farbe im Farbraum als Lab-Wert vorgegeben werden. Es kann auch der ermittelte Messwert mit den Koordinaten der gemessenen Farbe im Farbraum als LAB-Wert angezeigt werden.

Nach einem weiteren Aspekt der Erfindung kann das beschriebene Verfahrens auf Überprüfung der Validität bzw. Zuverlässigkeit der Farbmessung weiter optimiert werden, indem durch eine Recheneinheit oder in der Recheneinheit 20 in der Druckvorstufe eine Vorauswahl homogener Farbbereiche vorgenommen wird,

Ein bei Augenschein vermeintlich homogener Farbbereich 6 kann tatsächlich inhomogen dadurch sein, dass beim Mehrfarbendruck die eine Druckfarbe auf diesem Bereich homogen und eine andere Druckfarbe auf dem gleichen Druckbereich inhomogen aufgedruckt wird, Hierdurch kann der Farbbereich bzw. ein Farbfeld für eine Bedienungsperson homogen erscheinen, während tatsächlich eine Inhomogenität vorhanden ist, die optisch nicht oder nicht leicht erkennbar ist Um derartige inhomogene Farbbereiche zumindest anzuzeigen oder auch für die Auswahl durch die Bedienungsperson auszuschließen, wird in der Druckvorstufe durch eine elektronische Überwachungseinheit ermittelt, welche Farbbereiche des einzelnen Druckbildes einer bestimmten Farbe homogen gedruckt werden sollen. In der Druckvorstufe werden beim Vierfarbendruck vier getrennte Farbbilder in der elektronischen Steuerung der Druckmaschine erstellt, jeweils ein einzelnes Druckbild pro Farbe Hierbei kann bei jedem dieser vier einzelnen Druckbilder der Druckvorstufe festgestellt werden, welcher Farbbereich in jedem der vier Druckbilder homogen ausgebildet wird und welche homogenen Bereiche sich mit denen der anderen Druckbilder überlappen, Als Ergebnis dieser Überprüfung der einzelnen Druckbilder in der Druckvorstufe werden alle jene Bereiche des fertigen Druckbildes gespeichert, in denen jede einzelne Farbe homogen gedruckt wird und die entsprechenden homogenen Farbbereiche der anderen Druckbilder überlappen. Diese sich überlappenden homogenen Bereiche der einzelnen Druckbilder werden für das fertige Druckbild auf der Materialbahn übereinander gedruckt.

Für diese Überprüfung homogener Farbbereiche in der Druckvorstufe kann ein Überprüfungsprogramm eingesetzt werden entsprechend dem zuvor geschilderten Prüfprogramm hinsichtlich Homogenität des Sichtbereichs 8 durch Aufteilen eines bestimmten Bereichs in Einzelflächen und durch Bildung eines Mittelwerts aus diesen Einzelflächen.

Wenn durch die Bedienungsperson am Touchscreen 4 ein zu messendes Farbfeld 6 des Druckbildes für die Farbmessung ausgewählt wird, wird durch die Recheneinheit 20 dieses ausgewählte Farbfeld 6 mit den im Speicher hinterlegten Bereichen verglichen, die aus der Druckvorstufe als optimale Bereiche erkannt wurden Liegt das von der Bedienungsperson ausgewählte Farbfeld außerhalb der gespeicherten optimalen Bereiche, so kann der Bedienungsperson am Touchscreen 4 eine Auswahl jener Bereiche angeboten werden, die in der Umgebung des zunächst von der Bedienungsperson ausgewählten, aber nicht optimalen Farbfeldes liegen

Auf diese Weise kann sichergestellt werden, dass übereinander gedruckte homogene Farbbereiche von einzelnen Druckbildern der beteiligten Farben als Messbereich ausgewählt werden und nicht ein Messbereich, bei dem eine durch das Auge nicht wahrnehmbare Inhomogenität des Farbbereichs bzw Farbfeldes vorhanden ist.

Die beschriebene automatische Überprüfung der Zuverlässigkeit der Farbmessung ist insbesondere auch für eine Mittelwertbildung von Vorteil, bei der ein Mittelwert aus mehreren Farbmessergebnissen erstellt wird.

Im laufenden Druckbetrieb treten Veränderungen des für die Farbmessung gewählten Farbfeldes 6 auf, die durch verschiedene Einflüsse wie Temperatur, Veränderungen des Anpressdrucks des Druckzylinders der Druckmaschine und dergleichen bedingt sind. Es ist deshalb erwünscht, einen Mittelwert der Farbmessungen bei mehreren Umdrehungen des Druckzylinders zu ermitteln. Hierbei werden nur die durch die beschriebene Zuverlässigkeitsprüfung freigegebenen Messwerte gemittelt, wodurch man einen sehr genauen Mittelwert deshalb erhält, weil durch die Zuverlässigkeitsprüfung bereits als inhomogen beurteilte Messergenisse ausgesondert werden. Wenn eine Farbmessung eines ausgewählten Farbfeldes 6 nur durch den Farbmesskopf vorgenommen wird, wie dies im Stand der Technik der Fall ist, misst der Farbmesskopf auch von der Bedienungsperson nicht erkennbar inhomogene Farbfelder, die zu extremen Abweichungen eines Messwertes führen können. Durch die beschriebene Zuverlässigkeitsprüfung der Farbmessung werden solche extremen Messergebnisse ausgesondert, bevor sie in eine Mittelwertbildung eingehen können, in die erfindungsgemäß nur als zuverlässig bewertete Farbmesswerte einbezogen werden

Die beschriebene Zuverlässigkeitsprüfung der Farbmessung kann bei den verschiedenen Druckverfahren angewendet werden, beispielsweise auch beim Flexodruck

Beim Flexodruck erscheint im Sichtbereich der Messeinheit z.B, eine gleichmäßige Verteilung von Farbpunkten auf einem homogenen Hintergrund anstelle einer in Fig. 2b bei 8 wiedergegebenen homogenen Farbfläche Hierbei kann die Tonwertveränderung der einzelnen Druckpunkte durch die Kamera 2.2 und die daran angeschlossene Recheneinheit 20 überprüft werden, die sich dadurch ergibt, dass der Druckzylinder mit einem zu hohen oder zu geringen Druck an der Materialbahn 1 anliegt, wodurch die Größe der Druckpunkte des Druckbildes vergrößert oder verkleinert wird.

Bei der Messung im Flexodruck wird der Vollton im Messbereich und der Halbton (50 % des Volltones) im Messbereich gemessen und durch Vergleich der Messwerte mit diesen Halbton- und Volltonmesswerten ermittelt, ob der Tonwert des Flexodrucks durch einen zu hohen Anpressdruck am Druckzylinder über einen Schwellenwert hinaus verändert worden ist oder nicht.

Zur Überprüfung der Ergebnisse bzw, der Plausibilität der Messeinheit kann zusätzlich das Bild der Kamera 2.2 ausgeweitet werden. Wenn beispielsweise ein Halbton (50%) gedruckt wird, dann soll definitionsgemäß auch nur 50% der Fläche der Druckmarke mit Farbe ausgefüllt sein. Mit Hilfe einer Histogrammfunktion kann das Bild der Kamera 2.2 dahingehend untersucht weiden, ob tatsächlich nur 50% der Fläche der Druckmarke mit Farbe benetzt sind.

Das beschriebene Verfahren kann nicht nur bei einer laufenden Materialbahn, sondern auch bei einem stationären Druckbild zur Farbmessung eingesetzt werden Beispielsweise kann eine der Recheneinheit 20 entsprechende Recheneinheit mit einer Kamera 2.2 in einem Handgerät integriert werden, mit dem eine Farbmessung auf einem stationären Druckbild vorgenommen wird, indem das Handgerät auf ein F arbfeld bzw. einen Messbereich des Druckbildes gerichtet und gemessen wird

In der vorausgehenden Beschreibung wurde zur Vereinfachung der Darstellung ein Druckbild 10 mit einzelnen runden Farbmarken 6 wiedergegeben, die unterschiedliche Farben wie rot, blau, grün wiedergeben können. Hierbei bildet eine Farbmarke 6 ein Farbfeld, das auch in einem mehrfarbigen Druckbild als dem Augenschein nach homogenes Farbfeld in rot oder grün ausgewählt werden kann. Mit anderen Worten ist das erfindungsgemäß auszubildende Farbfeld nicht auf Farbmarken 6 beschränkt.

## Patentansprüche

1. Verfahren zum Messen des Farbwertes eines Farbfeldes bzw. Messbereichs, in einem Druckbild (10), umfassend die Schritte:
- Auswählen des Farbfeldes (6), dessen Farbwert gemessen werden soll, und Positionieren einer Messeinheit (2), die einen Farbmesskopf (2.1) mit einem Sichtbereich (8) und eine Bildaufnahmeeinrichtung (2.2) aufweist, über dem ausgewählten Farbfeld (6) des Druckbildes (10),
- Messen des ausgewählten Farbfeldes durch den Farbmesskopf (2.1) und Aufnahme eines Bildes (7) durch die Bildaufnahmeeinrichtung (2.2) **dadurch gekennzeichnet, dass** das Auswählen des Farbfeldes durch eine Bedienungsperson erfolgt, und durch die Schritte:
- Überprüfen der Farbhomogenität des Sichtbereiches (8) anhand des von der Bildaufnahmeeinrichtung (2.2) aufgenommenen Bildes (7) sowie
- Verwerfen des Messergebnisses, wenn der Sichtbereich (8) als nicht homogen beurteilt wird, und Freigabe des Messergebnisses, wenn Sichtbereich (8) als homogen beurteilt wird, für die weitere Verarbeitung des Messergebnisses.

2. Verfahren nach Anspruch 1, wobei die Überprüfung der Farbhomogenität des Sichtbereiches (8) anhand des aufgenommenen Bildes durch ein Bildverarbeitungsprogramm in einer Recheneinheit (20) ausgeführt wird.

3. Verfahren nach einem der vorhergehenden Ansprüche, wobei in einer Druckvorstufe, in der einzelne Druckbilder mit den einzelnen Farben eines Mehrfärbendrucks erstellt weiden, jene Bereiche in den einzelnen, mit einer einzelnen Farbe gedruckten Druckbildern ausgewählt werden, die in jedem einzelnen Druckbild homogen ausgedruckt werden sollen und mit den homogenen Bereichen der anderen einzelnen, mit einer einzelnen Farbe gedruckten Druckbilder sich überlappen, worauf diese übereinander zu druckenden, sich überlappenden homogenen Farbbereiche der einzelnen Druckbilder im fertigen Druckbild als für die Farbmessung bevorzugte Bereiche gespeichert werden.

4. Verfahren nach einem der vorhergehenden Ansprüche, wobei für die Auswahl des Farbenfeldes (6) ein Cursor mit einem runden Zielbereich (5.2) in Verbindung mit einer runden Farbmarke verwendet wird.

5. Verfahren nach einem der vorhergehenden Ansprüche, wobei zur Homogenitätsprüfung der Farbwert des aufgenommenen Bildes durch Vergleich mit einem als Referenzwert hinterlegten Farbwert verglichen wird und das aufgenommene Bild in Einzelflächen aufgeteilt wird, worauf aus den Farbmesswerten der Einzelflächen ein Mittelwert errechnet wird, der mit dem Farbmesswert einer Einzelfläche verglichen wird

6. Farbmessvorrichtung zum Messen eines Farbfeldes in einem Druckbild, umfassend
- eine quer über die laufende Materialbahn (I) verfahrbare Messeinheit (2) mit einem Farbmesskopf (2.1) und einer Kamera (2.2), **gekennzeichnet durch**:
- eine elektronische Auswähleinrichtung mit einem Bildschirm (4). auf dem das Farbfeld (6) in dem auf dem Bildschirm (4) wiedergegebenen Druckbild auswählbar ist,
- eine Verstelleinrichtung, welche die mit dieser Auswähleinrichtung verbundene Messeinheit (2) der Auswahl auf dem Bildschirm folgend über dem ausgewählten Farbfeld des Druckbildes auf der Materialbahn (1) positioniert. und
- eine Recheneinheit (20), welche das von der Kamera (2.2) aufgenommene Bild eines Sichtbereiches (8) des Farbmesskopfes auf Farbhomogenität überprüft, und den Farbmesswert des Farbfeldes (6) in Abhängigkeit vom Ergebnis der Homogenitätsprüfung freigibt oder verwirft.

7. Farbmessvorrichtung nach Anspruch 6, wobei in der Messeinheit (2) eine Beleuchtungseinrichtung für das von der Kamera (2.2) aufzunehmende und von der Messeinheit zu messende Bild angeordnet ist.

8. Farbmessvorrichtung nach Anspruch 6 oder 7, wobei die Umgebung (6a) des von der Kamera (2.2) aufzunehmenden Farbfeldes (6) durch eine Blendeneinrichtung abgedeckt ist.

9. Farbmessvorrichtung nach einem der Ansprüche 6-8, wobei eine Einrichtung zur Bestimmung eines Koordinatensystems für die Positionierung der Farbmesseinheit (2) vorgesehen ist sowie
eine Einrichtung zur Bestimmung eines Koordinatensystems des auf dem Bildschirm (4) wiedergegebenen Druckbildes, und
diese beiden Einrichtungen derart elektronisch synchronisiert sind, dass bei der Auswahl der Koordinaten eines Farbfeldes (6) auf dem Bildschirm (4) die gleichen Koordinaten an einer Verstelleinrichtung der Messeinheit (2) eingestellt werden mit der Folge, dass die Messeinheit (2) die gleiche Position über dem Druckbild (10) auf der Materialbahn einnimmt, die am Bildschirm (4) an dem auf dem Bildschirm wiedergegebenen Druckbild ausgewählt ist.

10. Farbmessvorrichtung nach Anspruch 9 wobei der Bildschirm (4) das Druckbild aus einer Druckvorstufe bzw. ein als pdf-Datei vorliegendes Druckbild aus einem Speicher wiedergibt und die Auswahl eines Farbfeldes an diesem wiedergegebenen Druckbild mit der Positionierung der Messeinheit (2) über dem Druckbild (10) auf der Materialbahn (1) synchronisiert ist.

## Claims

1. A method of colorimetric measurement of a colour field and a measuring area, respectively, in a printed image (10), the method comprising the steps of:
- selecting the colour field (6) the colour value of which is to be measured, and positioning of a measuring unit (2) having a colorimetric measuring head (2.1) having a field of view (8) and an image capturing device (2.2) above the selected colour field (6) of the printed image (10),
- measuring the selected colour field with the colorimetric measuring head (2.1) and capturing an image (7) with the image capturing device (2.2),
**characterized in that**
the selection of the colour field is achieved by a service person, the method further **characterized by** the steps of:
- checking the field of view (8) for colour homogeneity on the basis of the image (7) captured by the image capturing device (2.2) and
- rejecting the result of the measurement when the field of view (8) is judged to be non-homogenous, and approving the result of the measurement for further processing when the field of view (8) is judged to be homogenous.

2. The method according to claim 1, wherein the check of the field of view for colour homogeneity on the basis of the captured image is performed by an image processing program in a processor (20).

3. The method according to any of the preceding claims, wherein, in a prepress stage in which individual printed images with the colour components of a multicolour print are established, those areas are selected in the individual printed images that are printed with a single colour, which areas are to be printed homogenously in each individual printed image and overlap with non-homogenous regions of the other individual printed images that are printed with a single colour component, whereupon these overlapping homogenous colour regions of the individual printed images that are to be printed one upon the other in the printed image are stored as preferred regions for the colorimetric measurement.

4. The method according to any of the preceding claims, wherein a cursor with a round target area (5.2) is used in conjunction with a round colour mark for the selection of a colour field (6).

5. The method according to any of the preceding claims, wherein, for the homogeneity check, the colour value of the captured image is compared to a colour value by comparison with a colour value that has been established as a reference value, and the captured image is segmented into individual segments, whereupon, on the basis of the colour measurement values of the individual segments, an average is calculated that is compared with the colour measurement value of an individual segment.

6. A colorimetric measuring device for measuring a colour field in a printed image, the device comprising:
- a measuring unit (2) that is displaceable transversely across a running web of material (1) and has a colour measuring head (2.1) and a camera (2.2),
**characterized by**:
- an electronic selection device comprising a display screen (4) on which the colour field (6) is selectable in the printed image rendered on the display screen (4),
- an adjustment device which positions the measuring unit (2) associated with this selection device over the selected colour field of the printed image on the web (1) of material in accordance with the selection on the display screen, and
- a processor unit (20) which checks the image of a field of view (8) of the colorimetric measuring head, as captured by the camera (2.2), for colour homogeneity and approves or rejects the colour measurement value of the colour field (6) dependent upon the result of the homogeneity check.

7. The colorimetric measuring device according to claim 6, wherein the measuring unit (2) includes an illumination device for the image to be captured by the camera (2.2) and to be measured by the measuring unit.

8. The colorimetric measuring device according to claim 6 or 7, wherein the surroundings (6a) of the colour field (6) to be captured by the camera (2.2) are covered by a shading device.

9. The colorimetric measuring device according to any of the claims 6 to 8, wherein there is provided a device for determining a coordinate system for the positioning of the colorimetric measuring unit (2) as well as
a device for determining a coordinate system of the printed image to be rendered on the display screen (4), and
- these two devices are electronically synchronized such that, when the coordinates of the colour field (6) are selected on the display screen (4), the same coordinates are set at an adjusting device of the measuring unit (2), with the result that the measuring unit (2) assumes the same position over the printed image on the web of material that is selected on the display screen (4) in the printed image rendered on the display screen.

10. The colorimetric measuring device according to claim 9, wherein the display screen (4) reproduces the printed image from the prepress stage and a printed image, respectively, that is provided as a pdf-file from a memory, and the selection of a colour field in this rendered printed image is synchronized with the positioning of the measuring unit (2) over the printed image (10) on the material web (1).

## Revendications

1. Procédé de mesure de la valeur de couleur d'un champ de couleur resp. d'une plage de mesure, dans une image imprimée (10), comprenant les étapes suivantes :
- sélection du champ de couleur (6) dont la valeur de couleur doit être mesurée et positionnement d'une unité de mesure (2), qui comprend une tête de mesure de couleur (2.1) avec un champ de vision (8) et un dispositif de prise de vues (2.2), au-dessus du champ de couleur (6) sélectionné de l'image imprimée (10),
- mesure du champ de couleur sélectionné par la tête de mesure de couleur (2.1) et enregistrement d'une image (7) par le dispositif de prise de vues (2.2),
**caractérisé en ce que** la sélection du champ de couleur est effectuée par un opérateur et grâce aux étapes suivantes :
- contrôle de l'homogénéité de la couleur du champ de vision (8) à l'aide de l'image (7) enregistrée par le dispositif de prise de vues (2.2) ainsi que
- rejet du résultat de mesure lorsque le champ de vision (8) est évalué comme non homogène et validation du résultat de mesure lorsque le champ de vision (8) est évalué comme homogène, pour le traitement ultérieur du résultat de mesure.

2. Procédé selon la revendication 1, dans lequel le contrôle de l'homogénéité de la couleur du champ de vision (8) est effectué à l'aide de l'image enregistrée par un programme de traitement d'image dans une unité de calcul (20) .

3. Procédé selon l'une des revendications précédentes, dans lequel, dans une étape préalable d'impression, dans laquelle sont créées différentes images imprimées avec les différentes couleurs d'une impression multicolore, les zones des différentes images imprimées avec une seule couleur qui doivent être imprimées de manière homogène dans chaque image imprimée individuelle et qui se superposent avec les zones homogènes des autres différentes images imprimées avec une seule couleur, sont sélectionnées, ces zones de couleur homogènes des différentes images imprimées, à imprimer les unes sur les autres et qui se superposent, étant ensuite enregistrées dans l'image imprimée finie comme des zones préférées pour la mesure de la couleur.

4. Procédé selon l'une des revendications précédentes, dans lequel, pour la sélection du champ de couleur (6), un curseur avec une zone cible ronde (5.2) est utilisé en lien avec un repère de couleur rond.

5. Procédé selon l'une des revendications précédentes, dans lequel, pour le contrôle d'homogénéité, la valeur de couleur de l'image enregistrée est comparée avec une valeur de couleur enregistrée en tant que valeur de référence, et l'image enregistrée est divisée en surfaces individuelles, une valeur moyenne étant calculée à partir des valeurs de mesure de la couleur des surfaces individuelles et comparée avec la valeur de mesure de couleur d'une surface individuelle.

6. Dispositif de mesure de couleur pour la mesure d'un champ de couleur dans une image imprimée, comprenant :
- une unité de mesure (2) pouvant être déplacée transversalement au-dessus de la bande de matériau (1) en mouvement, avec une tête de mesure de couleur (2.1) et une caméra (2.2),
**caractérisé par** :
- une unité de sélection électronique avec un écran (4) sur lequel le champ de couleur (6) peut être sélectionné dans l'image imprimée reproduite sur l'écran (4),
- une unité de réglage qui positionne l'unité de mesure (2) reliée à ce dispositif de sélection, en suivant la sélection sur l'écran, au-dessus du champ de couleur sélectionné de l'image imprimée sur la bande de matériau (1) et
- une unité de calcul (20) qui contrôle l'image, enregistrée par la caméra (2.2), d'un champ de vision (8) de la tête de mesure de couleur en ce qui concerne l'homogénéité de la couleur et qui valide ou rejette la valeur de mesure de la couleur du champ de couleur (6) en fonction du résultat du contrôle d'homogénéité.

7. Dispositif de mesure de couleur selon la revendication 6, dans lequel, dans l'unité de mesure (2), est disposé un dispositif d'éclairage pour l'image à enregistrer par la caméra (2.2) et à mesurer par l'unité de mesure.

8. Dispositif de mesure de couleur selon la revendication 6 ou 7, dans lequel l'environnement (6a) du champ de couleur (6) à enregistrer par la caméra (2.2) est recouvert d'un dispositif à diaphragme.

9. Dispositif de mesure de couleur selon l'une des revendications 6 à 8, dans lequel un dispositif pour la détermination d'un système de coordonnées pour le positionnement de l'unité de mesure de couleur (2) est prévu et
un dispositif pour la détermination d'un système de coordonnées de l'image imprimée reproduite sur l'écran (4) et
ces deux dispositifs sont synchronisés électroniquement de façon à ce que, lors de la sélection des coordonnées d'un champ de couleur (6) sur l'écran (4), les mêmes coordonnées sont réglées sur un dispositif de réglage de l'unité de mesure (2) avec pour résultat que l'unité de mesure (2) adopte la même position au-dessus de l'image imprimée (10) sur la bande de matériau, que celle qui est sélectionnée à l'écran (4) sur l'image imprimée reproduite sur l'écran.

10. Dispositif de mesure de couleur selon la revendication 9, dans lequel l'écran (4) reproduit l'image imprimée à partir d'une étape préalable d'impression resp. d'une image imprimée présente en tant que fichier pdf dans une mémoire et la sélection d'un champ de couleur sur cette image imprimée reproduite est synchronisée avec le positionnement de l'unité de mesure (2) au-dessus de l'image imprimée (10) sur la bande de matériau (1).
